# EUROPÄISCHE PATENTSCHRIFT

(11) **EP 2 673 519 B1**
(45) Veröffentlichungstag und Bekanntmachung des Hinweises auf die Patenterteilung: **19.07.2017**
(21) Anmeldenummer: 12712889.0
(22) Anmeldetag: 27.01.2012
(51) Int. Cl.: F16D 13/04

(54) **KUPPLUNG MIT EINER VORKUPPLUNG UND EINER HAUPTKUPPLUNG**
CLUTCH HAVING A PRE-CLUTCH AND A MAIN CLUTCH
EMBRAYAGE COMPRENANT UN EMBRAYAGE AMONT ET UN EMBRAYAGE PRINCIPAL

(30) Priorität: 08.02.2011 DE 102011010692; 24.03.2011 DE 102011015059
(43) Veröffentlichungstag der Anmeldung: 18.12.2013
(73) Patentinhaber: Schaeffler Technologies AG & Co. KG, 91074 Herzogenaurach (DE)
(72) Erfinder: CHAMBRION, Martin, 67118 Geispolsheim (FR); RABER, Christoph, 66564 Ottweiler-Steinbach (DE)
(86) Internationale Anmeldenummer: PCT/DE2012/000063
(87) Internationale Veröffentlichungsnummer: WO 2012/107017

(56) Entgegenhaltungen:
- GB-A- 2 251 465
- US-A- 4 645 049
- US-A1- 2001 011 622
- US-A1- 2005 167 229

## Beschreibung

Die Erfindung betrifft eine Kupplung gemäß Patentanspruch 1.

Von der Patentanmelderin sind so genannte Booster-Kupplungen mit Drehmomentfühler bekannt. Diese Art von Kupplungen werden dazu verwendet, um hohe Drehmomente bei geringen Betätigungskräften der Kupplung übertragen zu können. Dazu erlauben die Booster-Kupplungen eine Reduzierung der Betätigungsenergie und bieten eine Begrenzung des Schubmomentes (Antihopping-Funktion).

Aus GB 2 251 465 A, US 4,645,049 A, US 2005/167229 A1 und US 2001/011622 A1 sind allgemein Kupplungen mit Rampenfunktion bekannt.

Die Aufgabe der vorliegenden Patentanmeldung besteht darin, eine verbesserte Kupplung bereitzustellen.

Die Aufgabe der Erfindung wird durch die Kupplung gemäß Patentanspruch 1 gelöst.

Ein Vorteil der vorgeschlagenen Kupplung besteht darin, dass die Dynamikempfindlichkeit der Kupplung verbessert ist. Dies wird dadurch erreicht, dass das Spannmittel für die Vorkopplung auf dem Kupplungskorb der Hauptkupplung abgestützt ist.

Es ist auch eine Mitnehmerscheibe in der Vorkupplung vorgesehen, die drehfest mit dem Kupplungskorb der Hauptkupplung verbunden ist und mithilfe von weiteren Federelementen vorgespannt ist. Auf diese Weise werden Schwingungen der Vorkupplung, die durch Schwankungen des übertragbaren Drehmomentes der Kupplung entstehen, unterdrückt. Das Vorsehen der weiteren Federelemente realisiert eine Belagfederung der Vorkupplung, so dass eine progressive Momentenübertragung verbessert wird.

Weitere vorteilhafte Ausführungsformen der Erfindung sind in den abhängigen Ansprüchen angegeben.

In einer weiteren Ausführungsform ist das Mittel zur Wirkverbindung zwischen der Vorkupplung und der Hauptkupplung über Federmittel mit dem Kupplungskern verbunden. Auf diese Weise wird das Mittel zur Wirkverbindung, insbesondere die Anpressplatte zentriert. In einer weiteren Ausführungsform werden Rampen der Wirkverbindung vorgespannt. Auf diese Weise wird eine bessere und schnellere Übertragung des Schließens oder Öffnens der Vorkupplung auf die Hauptkupplung erreicht.

In einer weiteren Ausführungsform ist ein Drehmomentfühler zwischen dem Kupplungskern und einem inneren Kupplungskorb der Hauptkupplung angeordnet. Auf diese Weise wird eine verbesserte dynamische Verbindung zwischen dem Kern der Kupplung und der Hauptkupplung erreicht. Dadurch wird insbesondere die Neigung der Kupplung zu Schwingungen, insbesondere zum Rupfen der Kupplung reduziert.

In einer weiteren Ausführungsform weist die Hauptkupplung einen Kupplungskorb auf, der als Stanzteil ausgebildet ist. Damit ist eine kostengünstige Fertigung möglich.

Weiterhin ist zur Stabilisierung des Kupplungskorbes ein Schutzring vorgesehen, der den Kupplungskorb umgibt und den als Stanzteil ausgebildeten Kupplungskorb gegen Bersten schützt.

In einer weiteren Ausführungsform weist die Mitnehmerscheibe nach außen ragende Zapfen auf, die in Ausnehmungen eines Deckels der Vorkupplung eingelegt sind. Auf diese Weise dienen die Seitenflächen der Ausnehmungen als Anschlagfläche, wenn eine Modulationsphase der zweiten Federelemente beendet ist.

In einer weiteren Ausführungsform sind in der Kupplung Rohre vorgesehen, die zur Leitung von Öl zur Schmierung der Kupplung verwendet werden. Vorzugsweise sind die Rohre parallel zu einer Symmetrieachse ausgerichtet und weisen beispielsweise seitliche Öffnungen zur Abgabe von Öl auf. Damit ist eine definierte und präzise Leitung des Schmierölstromes möglich.

In einer weiteren Ausführungsform sind die Vorkupplung und die Hauptkupplung über eine Fliehkraftkupplung miteinander gekoppelt. Beispielsweise kann die Fliehkraftkupplung zwischen dem Deckel der Vorkupplung und dem Kupplungskorb der Hauptkupplung vorgesehen sein. Auf diese Weise wird der Deckel erst mit dem Kupplungskorb mitbewegt, wenn die Fliehkraftkupplung geschlossen ist.

In einer weiteren Ausführungsform ist eine Ausgleichsmasse vorgesehen, das mit dem Wirkmittel zwischen der Vorkupplung und der Hauptkupplung gekoppelt ist und eine Dämpfung der Schwingungen des Wirkmittels ermöglicht.

In einer weiteren Ausführungsform ist die Ausgleichsmasse mit einer Rampe des Wirkmittels verbunden, wobei ein Zahnradsystem zur Kopplung zwischen der Ausgleichsmasse und der Rampe vorgesehen ist. Die Kopplung erfolgt in der Weise, dass die Rampe die Ausgleichsmasse in einer entgegengerichteten Drehrichtung antreibt. Auf diese Weise werden Schwingungen der Rampe durch die Ausgleichsmasse gedämpft. Damit ist das Wirkmittel unempfindlicher bei Schwingungsanregungen. Ist beispielsweise die Vorsteuerkupplung mit einem Motor verbunden, so bietet die Ausgleichsmasse eine Verbesserung der Unempfindlichkeit der Kupplung gegenüber Gasstößen, d.h. kurzzeitigen Drehmomentänderungen des Motors. Auf diese Weise werden kurzzeitige Drehmomentspitzen am Eingang der Vorkupplung gedämpft, so dass ein Schließen der Vorkupplung und damit ein Schließen der Hauptkupplung vermieden wird. Weiterhin ermöglicht die Ausgleichsmasse die Reduzierung von Rupfproblemen der Kupplung beim Anfahren.

Die Erfindung wird im Folgenden anhand der Figuren näher erläutert. Es zeigen
- Fig. 1: eine erste Ausführungsform der Kupplung mit zugedrückter Vorkupplung,
- Fig. 2: eine zweite Ausführungsform der Kupplung mit gedrückter Kupplung,
- Fig. 3: eine Querschnittsdarstellung der Ausführungsform der Fig. 1,
- Fig. 4: eine Detailansicht der Verbindung der Anpressplatte mit dem Kupplungskern,
- Fig. 5: eine perspektivische Darstellung des Kupplungskorbes der Ausführung der Fig. 1 und 3,
- Fig. 6: eine weitere Detaildarstellung der Ausführungsform der Fig. 3,
- Fig. 7: eine Detaildarstellung des Schmierungssystems der Ausführungsform der Fig. 3,
- Fig. 8: eine schematische Darstellung einer Kupplung mit Fliehkraftkupplung zwischen dem Kupplungskorb der Hauptkupplung und einem Deckel der Vorkupplung,
- Fig. 9: eine Prinzipdarstellung der Kupplung der Fig. 8 mit Fliehkraftkupplung,
- Fig. 10: eine schematische Darstellung einer Kupplung mit Ausgleichsmasse,
- Fig. 11: ein schematisches Diagramm zur Funktionsweise der Ausgleichsmasse,
- Fig. 12: einen Querschnitt durch eine perspektivische Darstellung der Kupplung mit Ausgleichsmasse gemäß Fig. 10,
- Fig. 13: eine schematische Darstellung des Zahnrades,
- Fig. 14: ein weiterer Querschnitt durch die Kupplung der Fig. 3 und
- Fig. 15: ein Aufschnitt einer perspektivischen Darstellung der Kupplung der Fig. 3.

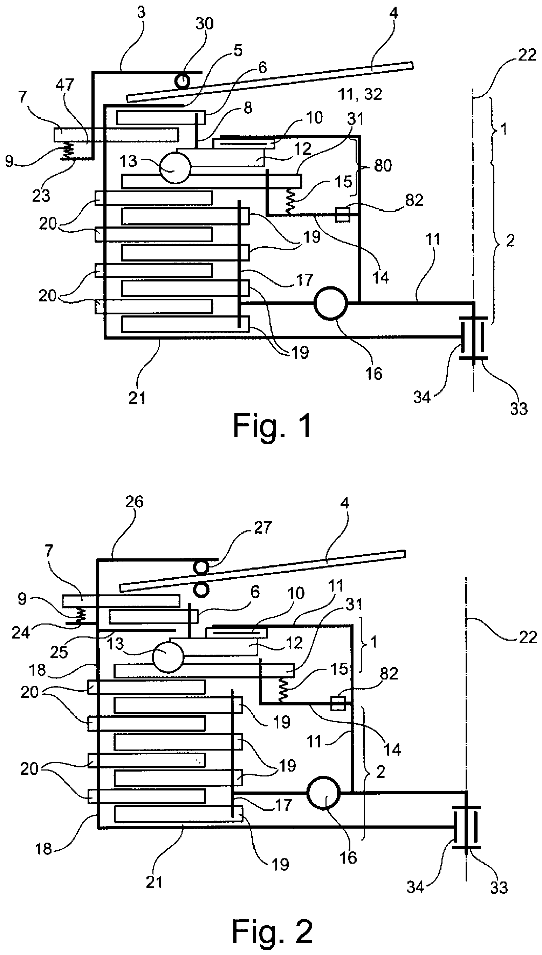

Fig. 1 zeigt eine schematische Teildarstellung einer ersten Ausführungsform einer Kupplung. In der Figur ist schematisch eine Hälfte der Kupplung in Bezug auf eine Mittenachse 22 dargestellt. Die in Fig. 1 dargestellten Teile sind rotationssymmetrisch zur Mittenachse 22 ausgebildet. Die Kupplung weist eine Vorkupplung 1 auf, die über ein Wirkmittel 80 mit der Hauptkupplung 2 gekoppelt ist. Die Vorkupplung 1, die Hauptkupplung 2 und das Wirkmittel 80 sind in der Weise ausgebildet, dass eine Offenposition und eine Schließposition der Vorkupplung auf die Hauptkupplung übertragen wird. Auf diese Weise ist nur eine Betätigung der Vorkupplung erforderlich, um gleichzeitig die Hauptkupplung zu öffnen oder zu schließen. Damit werden die Betätigungskräfte zum Öffnen oder Schließen der Kupplung reduziert.

Die Kupplung weist einen Kupplungskern 11 auf, der mit einem ersten Anschluss 33 verbunden ist. In der dargestellten Ausführungsform ist der erste Anschluss 33 an eine Getriebeausgangswelle angeschlossen. Der Kupplungskern 11 weist eine Anpressplatte 14 auf, in der drehfest, aber in axialer Richtung der Mittenachse 22 verschiebbar eine zweite Rampe 31 gehaltert ist. Abhängig von der gewählten Ausführungsform ist ein zweites Federmittel 15 vorgesehen, das die zweite Rampe 31 in Richtung auf eine zugeordnete erste Rampe 12 vorspannt. Zwischen der zweiten Rampe 31 und der ersten Rampe 12 ist eine Kugel 13 in Form eines Übertragungselementes angeordnet. Die zwei Rampen 12, 31 und die Kugel 13 bilden das Wirkmittel.

Die erste Rampe 12 ist parallel zur Mittenachse 22 verschiebbar gelagert und gegenüberliegend zur zweiten Rampe 31 gegen ein Lager 10 abgestützt. Das Lager 10 ist gegenüberliegend zur ersten Rampe 12 gegen ein Kernteil 32 abgestützt. Die erste Rampe 12 steht über ein Verbindungsmittel 8 mit einer Scheibe 6 in Verbindung, die angrenzend an eine obere Abstützscheibe 5 eines Kupplungskorbes 18 der Hauptkupplung 2 angeordnet ist. Gegenüberliegend zur Abstützscheibe 5 ist eine Mitnehmerscheibe 7 vorgesehen, die axial verschiebbar entlang der Mittenachse 22 und drehfest in dem Kupplungskorb 18 eingelegt ist. Weiterhin ist ein Deckel 3 vorgesehen, der am oberen Endbereich des Kupplungskorbes 18 angeordnet ist. Der Deckel 3 ist im Wesentlichen L-förmig ausgebildet und überdeckt die Abstützscheibe 5 und einen oberen seitlichen Endbereich des Kupplungskorbes 18. Weiterhin weist der Deckel 3 einen seitlich abstehenden Deckelrand 23 auf, der unterhalb der Mitnehmerscheibe 7 ausgebildet ist. Zwischen dem Deckelrand 23 und der Mitnehmerscheibe 7 ist ein erstes Federmittel 9 ausgebildet, das die Mitnehmerscheibe 7 in Richtung auf die Scheibe 6 vorspannt.

Zwischen der Abstützscheibe 5 und dem Deckel 3 ist als Spannmittel eine Tellerfeder 4 angeordnet, die auf der Abstützscheibe 5 in einem Endbereich abgestützt ist und an einem Auflager 30 des Deckels 3 anliegt. Die dargestellte Vorkupplung stellt eine zugedrückte Kupplung dar.

Der Kern 11 steht über einen Drehmomentfühler 16, der in Form einer Spiralfeder ausgebildet ist, mit einem inneren Kupplungskorb 17 der Hauptkupplung in Verbindung. Im inneren Kupplungskorb 17 sind Scheiben 19 gehaltert. Die Scheiben 19 sind drehfest mit dem inneren Korb 17 und parallel zur Mittenachse 22 axial zur Mittenachse 22 verschiebbar im inneren Korb 17 gehaltert. Jeweils zwischen zwei Scheiben 19 ist eine Mitnehmerscheibe 20 angeordnet, die drehfest mit dem Kupplungskorb 18 und axial zur Mittenachse 22 verschiebbar angeordnet sind. Zwischen der zweiten Rampe 31 und einer obersten Scheibe 19 ist eine Mitnehmerscheibe 20 angeordnet. Der Kupplungskorb 18 ist über eine Bodenplatte 21 mit einem zweiten Anschluss 34 verbunden. Der zweite Anschluss 34 steht mit einer Kurbelwelle eines Motors in Verbindung.

Das Wirkmittel, das die erste Rampe 12, das Übertragungselement 13 und die zweite Rampe 31 umfasst, ist in der Weise ausgebildet, dass eine Verdrehung der zwei Rampen 12, 31 gegeneinander dazu führt, dass die zweite Rampe 31 nach unten gedrückt wird und damit die Mitnehmerscheiben 20 und die Scheiben 19 zusammendrückt und somit die Hauptkupplung schließt. Dazu sind entsprechend geneigt angeordnete Rampenflächen ausgebildet. Abhängig von der gewählten Ausführungsform kann auch nur eine Rampe 12, 31 eine geneigt angeordnete Rampenfläche aufweisen. Eine Verschiebung der zwei Rampen 12, 31 findet nicht statt, wenn die Vorkupplung geöffnet ist, da in diesem Fall die Rampen nicht gegeneinander verdreht werden. Wird jedoch die Vorkupplung geschlossen, dann stützt sich die Tellerfeder 4 mit dem Ende an der Abstützscheibe 5 ab und drückt über das Auflager 30 den Deckel 3 nach oben. Dadurch wird die Mitnehmerscheibe 7, die über eine Auflagefläche 47 gegen den Deckel 3 in axialer Richtung abgestützt ist, nach oben gegen die Scheibe 6 gedrückt. Gleichzeitig wird durch die Tellerfeder 4 die Abstützscheibe 5 gegen die Scheibe 6 gedrückt. Somit wird ein Reibschluss zwischen der Scheibe 6 und der Mitnehmerscheibe 7 erreicht. Folglich wird die Scheibe 6 mit der Drehbewegung der Scheibe 7 mitbewegt. Somit wird über das Verbindungsmittel 8 auch die erste Rampe 12 in eine Drehbewegung gegenüber der zweiten Rampe 31 versetzt. Dadurch wird über die Rampenflächen die Kugel 13 nach unten in Richtung auf die zweite Rampe 31 gedrückt. Folglich drückt die zweite Rampe 31 die Mitnehmerscheiben 20 und die Scheiben 19 zusammen. Somit wird die Hauptkupplung 2 geschlossen.

Im geöffneten Zustand der Vorkupplung 1 findet keine Verdrehung der Scheibe 6 und damit der ersten Rampe 12 gegenüber der zweiten Rampe 31 statt. Somit ist bei geöffneter Vorkupplung 1 auch die Hauptkupplung 2 geöffnet.

Durch die Anordnung des ersten Federmittels 9, das die Mitnehmerscheibe 7 gegen die Scheibe 6 vorspannt, können Schwingungen in der Vorkupplung unterdrückt werden. Der Deckel 3 ist in der dargestellten Ausführungsform axial verschiebbar gegenüber dem Kupplungskorb 18, aber drehfest mit dem Kupplungskorb 18 verbunden.

Durch das Anordnen des zweiten Federmittels 15 wird eine Vorspannung der zweiten Rampe 31 in Richtung auf die erste Rampe 12 erreicht. Dadurch sind die Rampen immer auf Kraftschluss, so dass eine schnelle Übertragung einer relativen Verdrehung der zwei Rampen gegeneinander erfolgt. Abhängig von der gewählten Ausführungsform können zur Ausbildung der zweiten Federmittel beispielsweise Blattfederpakete oder Druckfedern eingesetzt werden. Zudem kann über die Blattfedern oder Druckfedern die Anpressplatte und die Rampe zentriert werden. Damit ist eine präzise Ausrichtung der Anpressplatte und der Rampe mittensymmetrisch zur Mittenachse 22 gegeben.

Die Anordnung des ersten Federmittels 9 ermöglicht eine Belagsfederung der Scheibe 6 und der Mitnehmerscheibe 7 der Vorkupplung, so dass eine progressive Momentenübertragung möglich ist. In einer weiteren Ausführung ist ein drittes Federmittel 82 vorgesehen, mit dem die Anpressplatte 14 mit dem Kern 11 verbunden ist.

Fig. 2 zeigt eine weitere Ausführungsform, bei der die Hauptkupplung 2 gemäß der Anordnung der Fig. 1 ausgebildet ist. Unterschiede in den zwei Ausführungsformen ergeben sich in der Ausbildung der Vorkupplung 1. In Fig. 2 ist kein separater Deckel vorgesehen, sondern die Tellerfeder 4 ist an einem Lager 27 an einer Deckelplatte 26 des Kupplungskorbes 18 abgestützt. Zudem steht ein äußeres Ende der Tellerfeder 4 in Wirkverbindung mit der Mitnehmerscheibe 7, die in dem Ausführungsbeispiel oberhalb der Scheibe 6 angeordnet ist. Die Scheibe 6 liegt auf einem zweiten Korbflansch 25 auf, der mit dem Kupplungskorb 18 verbunden ist. Zudem ist außerhalb des Kupplungskorbes 18 ein erster Korbflansch 24 ausgebildet. Zwischen dem ersten Korbflansch 24 und der Mitnehmerscheibe 7 ist das erste Federmittel 9 eingespannt. Damit wird wiederum eine Belagsfederung der Vorkupplung 1 erreicht. Die in Fig. 2 dargestellte Kupplung stellt eine gedrückte Kupplung dar. Die Funktionsweise ist ansonsten die gleiche wie die Funktionsweise der Kupplung der Fig. 1.

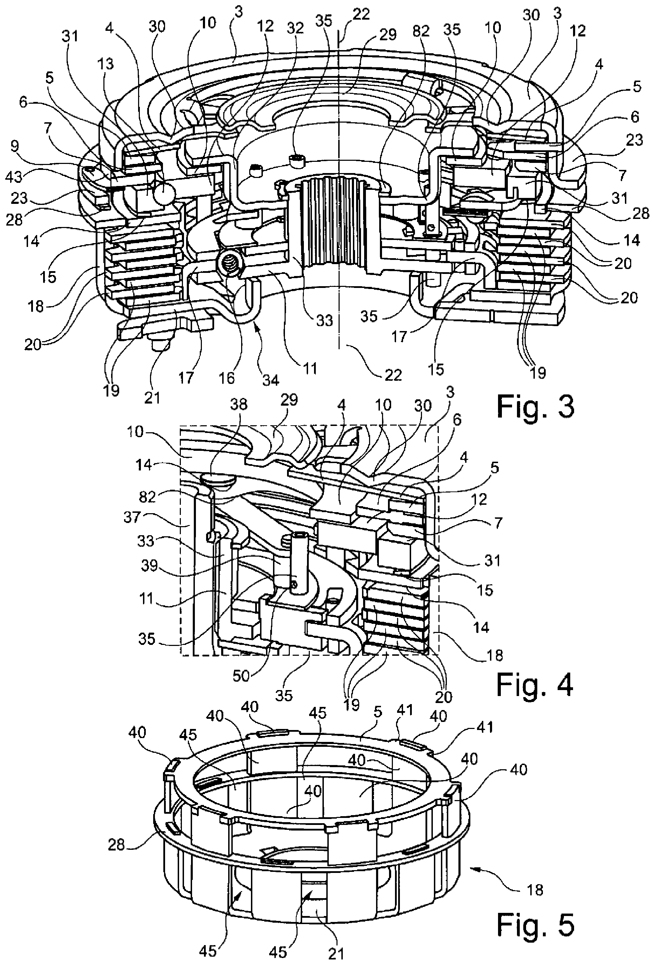

Fig. 3 zeigt einen Querschnitt durch eine perspektivische Darstellung der Kupplung der Fig. 1.

Fig. 3 zeigt deutlich die Ausbildung des Kupplungskerns 11, der auf der einen Seite mit dem ersten Anschluss 33 und auf der anderen Seite über den Drehmomentfühler 16 mit dem inneren Kupplungskorb 17 verbunden ist. Zur Betätigung der Tellerfeder 4 ist ein Betätigungsring 29 vorgesehen, der auf inneren Laschenenden der Tellerfeder 4 aufliegt. Zudem ist ein Kernteil 32 dargestellt, das mit dem ersten Anschluss 33 verbunden ist und zudem als Anlagefläche für das Lager 10 dient. Das Kernteil 32 ist topfförmig ausgebildet und liegt mit einem oberen nach außen ragenden Randbereich auf dem Lager 10 auf. Das Lager 10 ist beispielsweise als Nadellager ausgebildet. In der linken Seite der Darstellung ist ein Querschnitt durch die Kugel 13 und die zwei Rampen 12, 31 zu sehen. In der dargestellten Ausführungsform ist das zweite Federmittel 15 in Form einer Tellerfeder ausgebildet. Die Tellerfeder ist im äußeren Randbereich der zweiten Rampe 31 angeordnet und zwischen der zweiten Rampe 31 und der Anpressplatte 14 eingespannt.

In der dargestellten Ausführungsform ist das erste Federmittel 9 in Form einer Blattfeder ausgebildet, die zwischen dem Deckelrand 23 und der Mitnehmerscheibe 7 eingespannt ist. Dazu ragen Nasen der Mitnehmerscheibe 7 durch seitliche zweite Öffnungen 43 des Deckels 3.

Weiterhin ist zu erkennen, dass die Anpressplatte 14 über das dritte Federmittel 82 mit dem Kupplungskern 11 verbunden ist. Die dritten Federmittel sind in Form von Blattfedern ausgebildet. Zudem sind Rohre 35 zur Führung von Schmieröl vorgesehen.

Weiterhin ist erkennbar, dass die Mitnehmerscheiben 20 mit äußeren Endstücken in Ausnehmungen des Kupplungskorbes 18 eingreifen. Weiterhin ist der Kupplungskorb 18 in einem oberen Bereich von einem Schutzring 28 umgeben. Der Schutzring 28 sorgt dafür, dass der Kupplungskorb 18 nicht brechen kann. Dies ist insbesondere von Vorteil, wenn der Kupplungskorb 18 aus einem Stanzteil gebildet ist.

Fig. 4 zeigt eine Detailansicht der Abbildung der Fig. 3. Es ist ein Anschlussbereich 38 der Anpressplatte 14 dargestellt, der nach innen bis über den Kupplungskern 11 geführt ist. Der Anschlussbereich 38 ist über ein in Form einer Blattfeder ausgebildetes drittes Federmittel 82 mit einem Bolzen 39 des Kupplungskerns verbunden. Zur Befestigung der Anschlagplatte sind beispielsweise drei derartige Befestigungseinrichtungen vorgesehen. Dadurch wird die Anschlagplatte zentriert, drehfest mit dem Kern 11 verbunden und zudem federn gelagert. In der dargestellten Ausführung ist eine Getriebewelle 37 dargestellt, die mit dem ersten Anschluss 33 des Kupplungskerns 11 gekoppelt ist. Weiterhin ist das Rohr 35 erkennbar, das parallel zur Mittenachse 22 angeordnet ist und wenigstens eine seitliche Öffnung 50 aufweist. Das Kernteil 32 ist in Fig. 4 der Übersichtlichkeit halber nicht dargestellt.

Fig. 5 zeigt den Kupplungskorb 18 mit Bodenplatte 21. Der Kupplungskorb 18 weist die Bodenplatte 21 und beabstandete Seitenwände 40 auf. Zwischen den Seitenwänden 40 sind dritte Öffnungen 45 ausgebildet. Die Seitenwände 40 sind abwechselnd bis zu einer Mitte oder bis in den oberen Endbereich geführt. In der Mitte ist der Schutzring 28 angeordnet, der die Seitenwände 40 gegen ein Aufbiegen schützt. Im oberen Endbereich jeder zweiten Seitenwand 50 ist die Abstützscheibe 5 angeordnet. Die Abstützscheibe 5 weist Stege 41 auf, die fest mit den Seitenwänden 40 verbunden sind. Auf diese Weise wird eine kostengünstige und stabile Form des Kupplungskorbes 18 ermöglicht. Der Kupplungskorb 18 ist als Stanzteil ausgebildet und aufgrund des Schutzringes 28 trotzdem stabil.

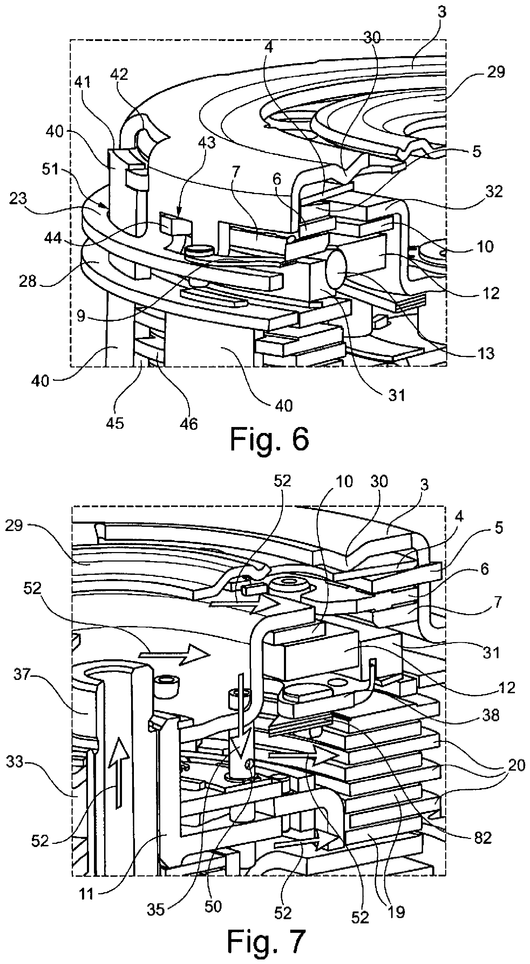

Fig. 6 zeigt eine Detailansicht der Fig. 3. Dabei sind deutlich die zweite Öffnung 43 in der Seitenwand des Deckels 3 zu erkennen, in die Zapfen 44 der Mitnehmerscheibe 7 ragen. Zudem ist zu erkennen, dass die Seitenwände 40 durch Führungsöffnungen 51 des Deckels 23 ragen. Weiterhin sind die Stege 41 durch Öffnungen 42 im oberen Eckbereich des Deckels 3 geführt. Zudem sind zweite Zapfen 46 der Mitnehmerscheiben 20 dargestellt, die in dritte Öffnungen 45 des Kupplungskorbes 18 ragen.

Fig. 7 zeigt eine weitere Detailansicht der Fig. 3 zur Erläuterung des vorteilhaften Schmierungssystems. Das Schmieröl wird beispielsweise durch die Getriebewelle 37 zugeführt. Der Schmierölstromfluss ist über Pfeile 52 schematisch dargestellt. Es sind mehrere Rohre 35 vorgesehen, die vorzugsweise parallel zur Mittenachse 22 in der Kupplung angeordnet sind, um Schmieröl auf festgelegten Wegen zu verteilen. Die Rohre 35 sind durch verschiedene Bauteile des Kupplungskerns geführt und verteilen den Schmierölstrom in verschiedenen Ebenen der Kupplung. Das Öl stammt aus der Getriebeeingangswelle und wird beispielsweise in dem Bereich gesammelt, der das Lager 10 abstützt. Davon ausgehend wird das Schmieröl über die Rohre in tiefere Bereiche nach unten geführt. Zur Verteilung weisen die Rohre 35 seitliche Öffnungen 50 auf, so dass auch zwischen einem Eingang und einem Ausgang des Rohres 35 Schmieröl abgegeben werden kann. Somit wird das Öl auf die verschiedenen Reibflächen verteilt. Abhängig von der gewählten Ausführungsform können die Rohre auch gebogen oder in anderen Winkelrichtungen ausgerichtet sein. In Fig. 7 ist zudem ein Teilabschnitt des Anschlussbereiches 18 der Anpressplatte 14 dargestellt.

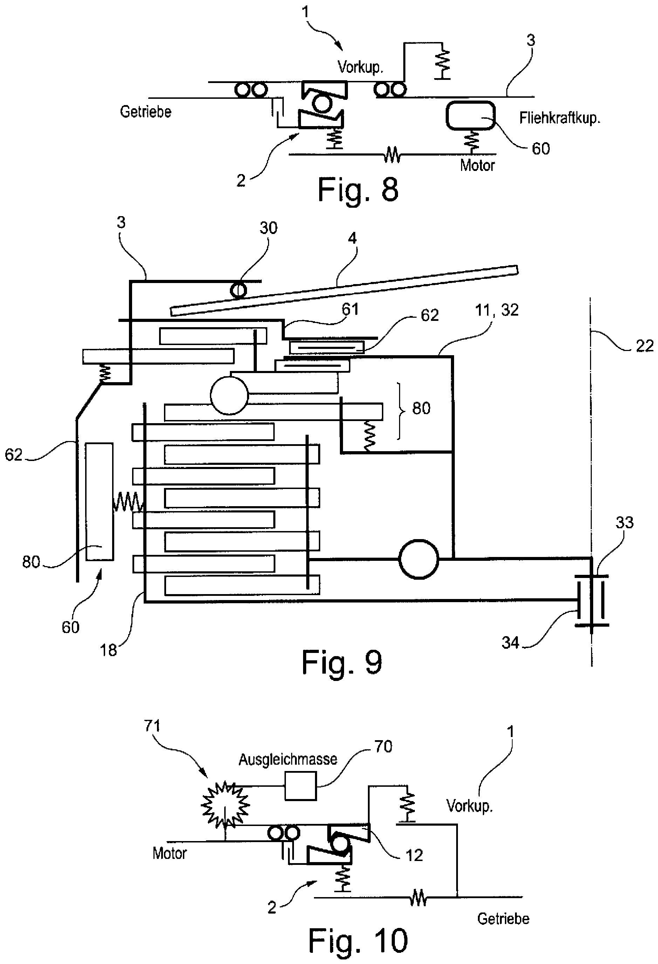

Fig. 8 zeigt eine schematische Darstellung einer Kupplung, bei der der Kupplungskorb 18 über eine Fliehkraftkupplung 60 mit der Vorsteuerkupplung gekoppelt ist. Die Idee besteht darin, dass eine Verbindung zwischen der Vorsteuerkupplung und dem Kupplungskorb, der in dem Ausführungsbeispiel der Fig. 3 über eine formschlüssige Verbindung erreicht wird, über eine Fliehkraftkupplung 60 dargestellt wird.

Fig. 9 zeigt eine schematische Darstellung des Aufbaus der Kupplung mit Fliehkraftkupplung gemäß Fig. 8. Im Wesentlichen ist die Kupplung gemäß dem schematischen Aufbau der Fig. 1 aufgebaut, wobei jedoch der Deckel 3 nicht formschlüssig, sondern über eine Fliehkraftkupplung 60 mit dem Kupplungskern gekoppelt ist. Weiterhin ist das Auflager für die Tellerfeder 4 auf einer Auflageplatte 61 des Deckels 3 abgestützt. Die Auflageplatte 61 ist über ein zweites Lager 62 gegen den Kern 11, insbesondere gegen das Kernteil 32 abgestützt. Der Deckel 3 ist im äußeren Randbereich 62 weiter nach unten überlappend zum Kupplungskorb 18 geführt. Zwischen dem Kupplungskorb 18 und dem Randbereich 62 ist die Fliehkraftkupplung angeordnet. Damit wird eine drehfeste Verbindung zwischen dem Deckel 3 und dem Kupplungskorb 18 erst erreicht, wenn sich der Kupplungskorb 18 dreht. Beim Drehen des Kupplungskorbes 18 werden Klappen 18 der Fliehkraftkupplung 60, die schwenkbar am Kupplungskorb 18 gehaltert sind, nach außen gezogen, bis sie auf die Innenseite des Randbereiches 62 des Deckels 3 drücken. Dadurch wird eine Kontaktkraft erzeugt, die ein Drehmoment auf den Deckel 3 ausübt. Dadurch wird der Deckel angetrieben, mit dem Kupplungskorb 18 sich zu drehen.

Fig. 10 zeigt eine schematische Darstellung einer weiteren Ausführungsform einer Kupplung, bei der eine Ausgleichsmasse 70 mit dem Wirkmittel, d.h. einer Rampe der Vorkupplung 1 gekoppelt ist. Im dargestellten Ausführungsbeispiel ist die Vorsteuerkupplung mit einem Motoranschluss verbunden. Die erste Rampe 12 steht über ein Verbindungsmittel 71 mit der Ausgleichsmasse 70 in Verbindung. Das Verbindungsmittel ist in der Weise ausgebildet, dass eine Beschleunigung der ersten Rampe 12 gedämpft wird. Auf diese Weise wird eine ungewünschte Anregung der ersten Rampe 12 reduziert, insbesondere unterbunden. Solange die Vorkupplung geöffnet ist, folgt im dargestellten Ausführungsbeispiel die Vorkupplung genau der Drehung der Motorantriebswelle. Das heißt, die zwei Rampen 12, 31 können sich nicht gegenseitig verdrehen und somit ist die Hauptkupplung 2 geöffnet.

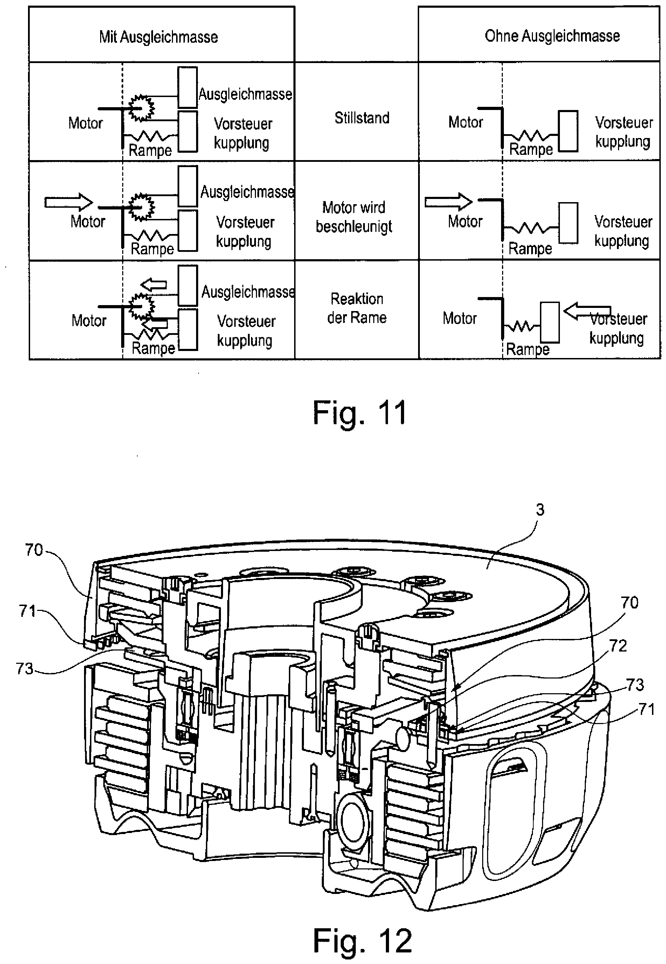

Das Funktionsprinzip kann anhand der Fig. 11 erläutert werden. Die zwei Rampen können als eine Art Feder angesehen werden, die die Vorkupplung mit dem Motor verbindet. Bei dem System ohne Ausgleichsmasse 70 erzeugt die Beschleunigung des Motors eine dynamische Kraft. Diese Kraft wird der Vorkupplung durch die Feder (Rampen) übertragen. Diese Belastung spannt die Feder. Somit verdreht sich die Feder, so dass die Hauptkupplung geschlossen wird.

Durch das Vorsehen der Ausgleichsmasse wird die dynamische Kraft des Motors von der ersten Rampe 12 auf die Ausgleichsmasse 70 beispielsweise über Zahnräder übertragen. Diese Konstruktion verhindert die Belastung der Rampen, so dass eine Verdrehung der Rampen vermieden wird und infolgedessen die Schließung der Hauptkupplung unterbunden wird.

Somit besteht ein Vorteil dieser Anordnung darin, dass die Kupplung unempfindlicher gegenüber Gasstößen wird. Zudem werden Rupfprobleme beim Anfahren des Fahrzeuges oder eines Motorrades unterbunden.

Fig. 12 zeigt einen Querschnitt durch eine perspektivische Darstellung einer Kupplung gemäß Fig. 10. In dieser Ausführungsform ist die zweite Rampe 31 über ein Verbindungsmittel in Form eines Zahnringsystems mit einer Ausgleichsmasse 70 verbunden. Die Ausgleichsmasse 70 ist in Form eines Ringes ausgebildet, der drehbar auf einem Deckel 3 der Kupplung gelagert ist. Die erste Rampe 12 weist einen äußeren Zahnring 72 auf, der in Eingriff mit einem Zahnrad 73 steht. Das Zahnrad 73 ist drehbar in der Kupplung gelagert. Das Zahnrad ist mit einem zweiten Zahnring 71 in Eingriff, das auf der Innenseite der Ausgleichsmasse 70 ausgebildet ist. Wird nun die erste Rampe 12 beschleunigt, so wird über das Zahnradsystem der Ausgleichsmasse 70 in entgegengesetzter Richtung bewegt. Damit wird die Beschleunigung des zweiten Rampenringes gebremst. Anstelle von Zahnrädern können auch andere Wirkmittel wie z.B. Riemen zur Übertragung der Bewegung der ersten Rampe auf die Ausgleichsmasse 70 verwendet werden.

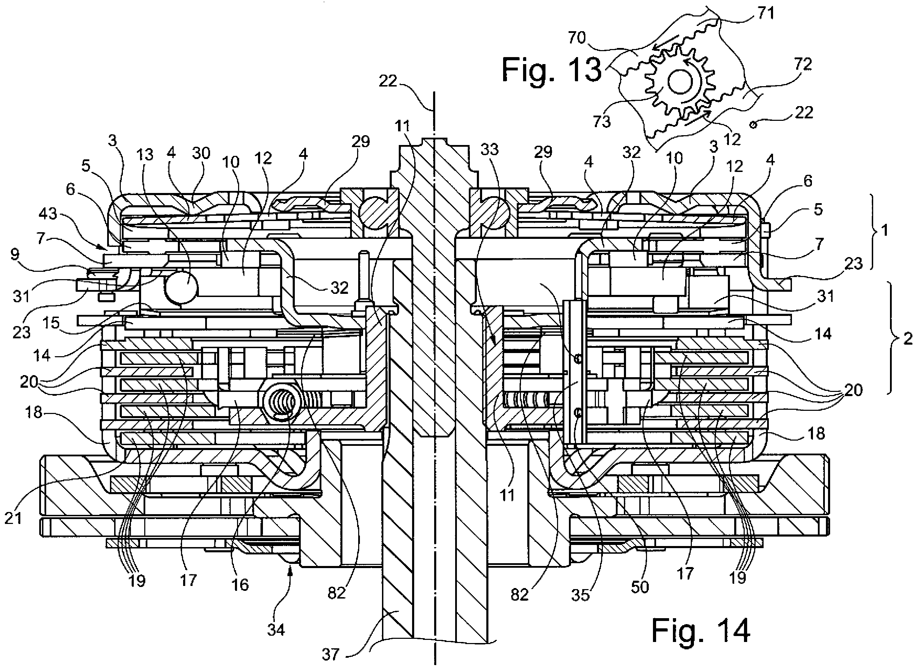

Fig. 13 zeigt eine schematische Darstellung des Zahnrades 73 mit der ersten Rampe 12 und der Ausgleichsmasse 70.

Fig. 14 zeigt einen weiteren Querschnitt durch die Ausführungsform der Fig. 3.

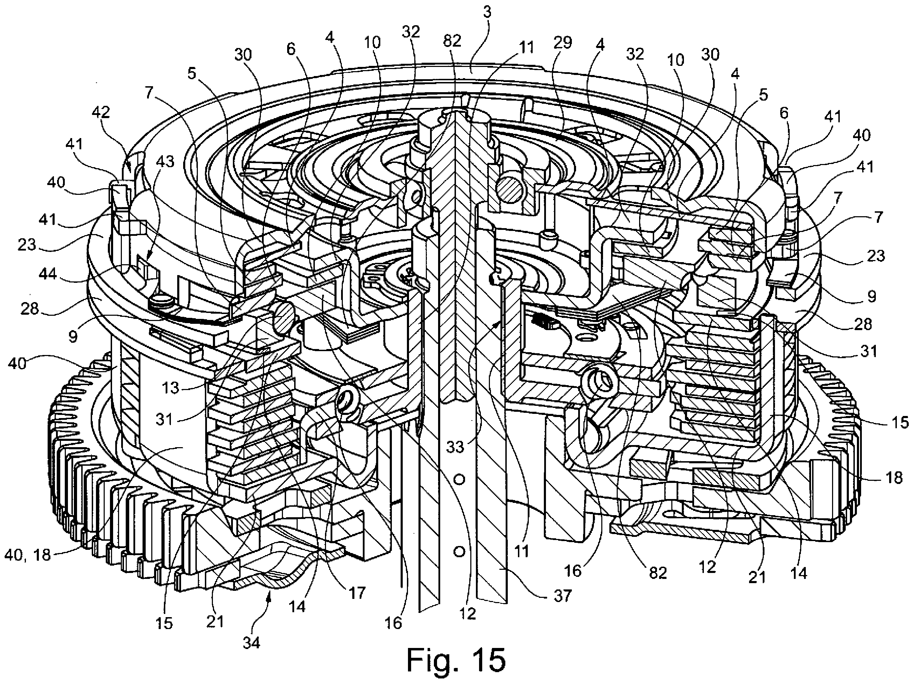

Fig. 15 zeigt einen perspektivischen Teilausschnitt der Ausführungsform der Fig. 3.

### Bezugszeichenliste

- 1: Vorkupplung
- 2: Hauptkupplung
- 3: Deckel
- 4: Tellerfeder
- 5: Abstützscheibe
- 6: Scheibe
- 7: Mitnehmerscheibe
- 8: Verbindungsmittel
- 9: erstes Federmittel
- 10: Lager
- 11: Kern
- 12: erste Rampe
- 13: Kugel
- 14: Anpressplatte
- 15: zweites Federmittel
- 16: Drehmomentfühler
- 17: innerer Kupplungskorb
- 18: Kupplungskorb
- 19: Scheibe
- 20: Mitnehmerscheibe
- 21: Bodenplatte
- 22: Mittenachse
- 23: Deckelrand
- 24: erster Korbflansch
- 25: zweiter Korbflansch
- 26: Deckelplatte
- 27: Lager
- 28: Schutzring
- 29: Betätigungsring
- 30: Auflager
- 31: zweite Rampe
- 32: Kernteil
- 33: erster Anschluss
- 34: zweiter Anschluss
- 35: Rohr
- 37: Getriebewelle
- 38: Anschlussbereich
- 39: Bolzen
- 40: Seitenwand
- 41: Stege
- 42: Öffnung
- 43: zweite Öffnung
- 44: Zapfen
- 45: dritte Öffnung
- 46: zweiter Zapfen
- 47: Auflagefläche
- 50: seitliche Öffnung
- 51: Führungsöffnung
- 52: Pfeil
- 60: Fliehkraftkupplung
- 61: Auflageplatte
- 62: Randbereich
- 70: Ausgleichsmasse
- 71: zweiter Zahnring
- 72: äußerer Zahnring
- 73: Zahnrad
- 80: Wirkmittel
- 82: drittes Federmittel

## Patentansprüche

1. Kupplung mit einer Vorkupplung (1) und mit einer Hauptkupplung (2), wobei die Vorkupplung (1) über ein Spannmittel (4) in einen geschlossenen oder einen offenen Zustand bringbar ist, wobei die Vorkupplung (1) über eine Wirkverbindung (80) mit der Hauptkupplung (2) in der Weise verbunden ist, dass die Offenposition und die Schließposition der Vorkupplung (1) auf die Hauptkupplung (2) übertragen wird, wobei das Spannmittel (4) auf einem Kupplungskorb (18) der Hauptkupplung (2) abgestützt ist, **dadurch gekennzeichnet, dass** die Vorkupplung (1) eine Mitnehmerscheibe (7) und eine Scheibe (6) aufweist, wobei die Mitnehmerscheibe (7) axial beweglich und drehfest mit einem Kupplungskorb (18) der Hauptkupplung (4) verbunden ist, wobei die Scheibe (6) drehbar am Kupplungskern (11) gelagert ist, wobei die Mitnehmerscheibe (7) über erste Federelemente (9) vorgespannt ist.

2. Kupplung nach Anspruch 1, **dadurch gekennzeichnet, dass** die Wirkverbindung (80) eine Rampe (12), ein Übertragungselement (13) und eine Anpressplatte (14) aufweist, dass die Rampe (12) mit der Vorkupplung (1) gekoppelt ist, dass die Anpressplatte (14) in Wirkverbindung mit der Hauptkupplung (2) steht, dass zwischen der Rampe (12) und der Anpressplatte (14) zur Kraftübertragung das Übertragungselement (13) angeordnet ist, und dass die Anpressplatte (14) über Federmittel (82) mit einem Kupplungskern (11) verbunden ist.

3. Kupplung nach einem der Ansprüche 1 oder 2, **dadurch gekennzeichnet, dass** zwischen dem Übertragungselement (13) und der Anpressplatte (14) eine weitere Rampe (31) vorgesehen ist, und dass weitere Federmittel (15) vorgesehen sind, die die Rampen (12,31) aufeinander vorspannen.

4. Kupplung nach einem der Ansprüche 1 bis 3, **dadurch gekennzeichnet, dass** die Mitnehmerschiebe (7) mit Zapfen (44) in Öffnungen (43) eines Deckels (3) der Vorkupplung (1) eingelegt ist.

5. Kupplung nach einem der Ansprüche 1 bis 4, **dadurch gekennzeichnet, dass** ein Drehmomentfühler (16) zwischen dem Kupplungskern (11) und einem inneren Kupplungskorb (17) der Hauptkupplung angeordnet ist.

6. Kupplung nach einem der Ansprüche 1 bis 5, **dadurch gekennzeichnet, dass** die Hauptkupplung (2) einen Kupplungskorb (18) aufweist, und dass der Kupplungskorb (18) als Stanzteil ausgebildet ist.

7. Kupplung nach Anspruch 6, **dadurch gekennzeichnet, dass** der Kupplungskorb (18) von einem Schutzring (28) umgeben ist, wobei der Schutzring (28) den Kupplungskorb (18) gegen Bersten schützt.

8. Kupplung nach einem der Ansprüche 1 bis 7, **dadurch gekennzeichnet, dass** Rohre (35) zur Leitung von Öl zur Schmierung der Kupplung vorgesehen sind.

9. Kupplung nach einem der Ansprüche 1 bis 8, **dadurch gekennzeichnet, dass** die Vorkupplung (1) und die Hauptkupplung (2) über eine Fliehkraftkupplung (60) miteinander gekoppelt sind.

10. Kupplung nach einem der Ansprüche 1 bis 9, **dadurch gekennzeichnet, dass** eine Ausgleichsmasse (70) vorgesehen ist, die mit der Rampe (12) gekoppelt ist, und die eine Beschleunigung der Rampe (12) dämpft.

11. Kupplung nach Anspruch 10, **dadurch gekennzeichnet, dass** die Rampe (12) über ein Zahnradsystem (71,72,73) mit der Ausgleichsmasse gekoppelt ist.

## Claims

1. Clutch having a pre-clutch (1) and having a main clutch (2), it being possible for the pre-clutch (1) to be moved via a clamping means (4) into a closed or an open state, the pre-clutch (1) being connected to the main clutch (2) via an operative connection (80) in such a way that the open position and the closed position of the pre-clutch (1) are transmitted to the main clutch (2), the clamping means (4) being supported on a clutch basket (18) of the main clutch (2), **characterized in that** the pre-clutch (1) has a driver plate (7) and a plate (6), the driver plate (7) being connected axially movably and fixedly to a clutch basket (18) of the main clutch (4) so as to rotate with it, the plate (6) being mounted rotatably on the clutch core (11), the driver plate (7) being prestressed via first spring elements (9).

2. Clutch according to Claim 1, **characterized in that** the operative connection (80) has a ramp (12), a transmission element (13) and a pressure plate (14), **in that** the ramp (12) is coupled to the pre-clutch (1), **in that** the pressure plate (14) is operatively connected to the main clutch (2), **in that** the transmission element (13) is arranged between the ramp (12) and the pressure plate (14) for the transmission of power, and **in that** the pressure plate (14) is connected via spring means (82) to a clutch core (11).

3. Clutch according to either of Claims 1 and 2, **characterized in that** a further ramp (31) is provided between the transmission element (13) and the pressure plate (14), and **in that** further spring means (15) are provided which prestress the ramps (12, 31) onto one another.

4. Clutch according to one of Claims 1 to 3, **characterized in that** the driver plate (7) is inserted with pins (44) into openings (43) of a cover (3) of the pre-clutch (1).

5. Clutch according to one of Claims 1 to 4, **characterized in that** a torque sensor (16) is arranged between the clutch core (11) and an inner clutch basket (17) of the main clutch.

6. Clutch according to one of Claims 1 to 5, **characterized in that** the main clutch (2) has a clutch basket (18), and **in that** the clutch basket (18) is configured as a punched part.

7. Clutch according to Claim 6, **characterized in that** the clutch basket (18) is surrounded by a protective ring (28), the protective ring (28) protecting the clutch basket (18) against bursting.

8. Clutch according to one of Claims 1 to 7, **characterized in that** pipes (35) are provided for conducting oil for lubricating the clutch.

9. Clutch according to one of Claims 1 to 8, **characterized in that** the pre-clutch (1) and the main clutch (2) are coupled to one another via a centrifugal clutch (60).

10. Clutch according to one of Claims 1 to 9, **characterized in that** a compensating mass (70) is provided which is coupled to the ramp (12) and which damps an acceleration of the ramp (12).

11. Clutch according to Claim 10, **characterized in that** the ramp (12) is coupled to the compensating mass via a gearwheel system (71, 72, 73).

## Revendications

1. Embrayage comprenant un embrayage amont (1) et un embrayage principal (2), l'embrayage amont (1) pouvant être amené par le biais d'un moyen de serrage (4) dans un état fermé ou dans un état ouvert, l'embrayage amont (1) étant connecté par le biais d'une liaison fonctionnelle (80) à l'embrayage principal (2) de telle sorte que la position d'ouverture et la position de fermeture de l'embrayage amont (1) soient transmises à l'embrayage principal (2), le moyen de serrage (4) étant supporté sur une cloche d'embrayage (18) de l'embrayage principal (2), **caractérisé en ce que** l'embrayage amont (1) présente un disque d'entraînement (7) et un disque (6), le disque d'entraînement (7) étant connecté de manière déplaçable axialement et de manière solidaire en rotation à une cloche d'embrayage (18) de l'embrayage principal (4), le disque (6) étant supporté de manière à pouvoir tourner sur le moyeu d'embrayage (11), le disque d'entraînement (7) étant précontraint par le biais de premiers éléments de ressort (9).

2. Embrayage selon la revendication 1, **caractérisé en ce que** la liaison fonctionnelle (80) présente une rampe (12), un élément de transmission (13) et une plaque de pressage (14), **en ce que** la rampe (12) est accouplée à l'embrayage amont (1), **en ce que** la plaque de pressage (14) est en liaison fonctionnelle avec l'embrayage principal (2), **en ce qu'**entre la rampe (12) et la plaque de pressage (14) est disposé l'élément de transmission (13) en vue du transfert de force et **en ce que** la plaque de pressage (14) est connectée par le biais de moyens de ressort (82) à un moyeu d'embrayage (11).

3. Embrayage selon l'une quelconque des revendications 1 ou 2, **caractérisé en ce qu'**entre l'élément de transmission (13) et la plaque de pressage (14) est prévue une rampe supplémentaire (31) et **en ce que** des moyens de ressort supplémentaires (15) sont prévus, lesquels précontraignent les rampes (12, 31) l'une sur l'autre.

4. Embrayage selon l'une quelconque des revendications 1 à 3, **caractérisé en ce que** le disque d'entraînement (7) est inséré avec des tourillons (44) dans des ouvertures (43) d'un couvercle (3) de l'embrayage amont (1).

5. Embrayage selon l'une quelconque des revendications 1 à 4, **caractérisé en ce qu'**un capteur de couple (16) est disposé entre le moyeu d'embrayage (11) et une cloche d'embrayage interne (17) de l'embrayage principal.

6. Embrayage selon l'une quelconque des revendications 1 à 5, **caractérisé en ce que** l'embrayage principal (2) présente une cloche d'embrayage (18) et **en ce que** la cloche d'embrayage (18) est réalisée sous forme de pièce estampée.

7. Embrayage selon la revendication 6, **caractérisé en ce que** la cloche d'embrayage (18) est entourée par un anneau de protection (28), l'anneau de protection (28) protégeant la cloche d'embrayage (18) contre un éclatement.

8. Embrayage selon l'une quelconque des revendications 1 à 7, **caractérisé en ce que** des conduits (35) pour conduire de l'huile de lubrification de l'embrayage sont prévus.

9. Embrayage selon l'une quelconque des revendications 1 à 8, **caractérisé en ce que** l'embrayage amont (1) et l'embrayage principal (2) sont accouplés l'un à l'autre par le biais d'un embrayage à force centrifuge (60).

10. Embrayage selon l'une quelconque des revendications 1 à 9, **caractérisé en ce qu'**une masse d'équilibrage (70) est prévue, laquelle est accouplée à la rampe (12) et amortit une accélération de la rampe (12).

11. Embrayage selon la revendication 10, **caractérisé en ce que** la rampe (12) est accouplée à la masse d'équilibrage par le biais d'un système de roues dentées (71, 72, 73).
